# EUROPEAN PATENT APPLICATION

(11) **EP 2 923 896 A1**
(43) Date of publication of application: **30.09.2015**
(21) Application number: 13898485.1
(22) Date of filing: 18.12.2013
(51) Int. Cl.: B60R 22/24

(54) **THROUGH ANCHOR**

(71) Applicant: Enshu Co., Ltd., Shizuoka 438-0831 (JP)
(72) Inventor: ITO, Tadao, Iwata-shi Shizuoka 438-0077 (JP)
(74) Representative: DREISS Patentanwälte PartG mbB
(86) International application number: PCT/JP2013/083986
(87) International publication number: WO 2015/092891

(57) **Abstract**

In a through anchor (10), a bush (18) is molded to the entire periphery of a securing hole (14) in an anchor plate (12), and the anchor plate (12) is secured at the bush (18) to a vehicle body by a bolt (20). Here, when the through anchor (10) is rotated about the bolt (20), a tube portion (18A), flange portions (18B), and projecting portions (18C) of the bush (18) slide on the vehicle body and the bolt (20). For this reason, rotational performance of the through anchor (10) can be improved.

## Description

### Technical Field

The present invention relates to a through anchor through which is inserted webbing worn by an occupant of a vehicle.

### Background Art

In the through anchor described in Japanese Patent Application Laid-open (JP-A) No. 2013-91446, a bolt insertion hole is formed in a metal plate, and the metal plate is attached at the bolt insertion hole to a side of a vehicle body by a bolt and made rotatable. Moreover, a webbing insertion hole is formed through the metal plate, and a resin mold portion is secured to a periphery of the webbing insertion hole, but no at an entire outer peripheral end surface of the metal plate.

Here, in this through anchor, being able to improve the rotational performance of the metal plate is preferred.

### DISCLOSURE OF INVENTION

### Technical Problem

In consideration of the circumstances described above, it is an object of the present invention to obtain a through anchor that can improve the rotational performance of a main body member.

### Solution to Problem

A through anchor of a first aspect of the present invention comprises: a main body member in which are formed an attachment hole at which the main body member is attached to a side of a vehicle body and made rotatable and a through hole through which is inserted webbing worn by an occupant of a vehicle; a sliding support member that is secured to a periphery of the through hole, but no at an entire outer peripheral end surface of the main body member, and that slidably supports the webbing; and a peripheral portion that is secured to a periphery of the attachment hole in the main body member, is integrated with the sliding support member, and reduces rotational resistance of the main body member.

A through anchor of a second aspect of the present invention comprises: a main body member in which are formed an attachment hole at which the main body member is attached to a side of a vehicle body and made rotatable and a through hole through which is inserted webbing worn by an occupant of a vehicle; a sliding support member that is secured to a periphery of the through hole, but no at an entire outer peripheral end surface of the main body member, and that slidably supports the webbing; a stiff portion that is secured to a periphery of the attachment hole in the main body member, is stiff, and reduces rotational resistance of the main body member; and an elastic portion that is secured to the periphery of the attachment hole in the main body member, is elastic, and reduces the rotational resistance of the main body member.

A through anchor of a third aspect of the present invention is the through anchor of the second aspect of the present invention, wherein the stiff portion and the elastic portion are integrated.

A through anchor of a fourth aspect of the present invention comprises: a main body member in which are formed an attachment hole at which the main body member is attached to a side of a vehicle body and made rotatable and a through hole through which is inserted webbing worn by an occupant of a vehicle; a sliding support member that is secured to a periphery of the through hole, but no at an entire outer peripheral end surface of the main body member, and that slidably supports the webbing; and elastic portions that are secured to a periphery of the attachment hole in the main body member, are plurally disposed in a circumferential direction of the attachment hole, are elastic, and reduce rotational resistance of the main body member.

A through anchor of a fifth aspect of the present invention is the through anchor of the fourth aspect of the present invention, further comprising a stiff portion that is secured to the periphery of the attachment hole in the main body member, is disposed between the elastic portions, is stiff, and reduces the rotational resistance of the main body member.

A through anchor of a sixth aspect of the present invention comprises: a main body member in which are formed an attachment hole at which the main body member is attached to a side of a vehicle body and made rotatable and a through hole through which is inserted webbing worn by an occupant of a vehicle; a sliding support member that is secured to a periphery of the through hole, but no at an entire outer peripheral end surface of the main body member, and that slidably supports the webbing; and a peripheral portion that is secured to a periphery of the attachment hole in the main body member, with a section of the peripheral portion on an obverse side of the main body member and a section of the peripheral portion on an reverse side of the main body member being integrated, and reduces rotational resistance of the main body member.

A through anchor of a seventh aspect of the present invention comprises: a main body member in which are formed an attachment hole at which the main body member is attached to a side of a vehicle body and made rotatable and a through hole through which is inserted webbing worn by an occupant of a vehicle; a sliding support member that is secured to a periphery of the through hole, but no at an entire outer peripheral end surface of the main body member, and that slidably supports the webbing; and an elastic portion that is secured to a periphery of the attachment hole in the main body member, is integrated with the sliding support member, is elastic, and reduces rotational resistance of the main body member. Advantageous Effects of Invention

In the through anchor of the first aspect of the present invention, the attachment hole is formed in the main body member, and the main body member is attached at the attachment hole to the side of the vehicle body and made rotatable. Furthermore, the through hole is formed in the main body member, and the webbing worn by the occupant of the vehicle is inserted through the through hole. Moreover, the sliding support member is secured to the periphery of the through hole, but no at the entire outer peripheral end surface of the main body member, and the sliding support member slidably supports the webbing.

Here, the peripheral portion is secured to the periphery of the attachment hole in the main body member, and the peripheral portion reduces the rotational resistance of the main body member. For this reason, the rotational performance of the main body member can be improved.

Moreover, the peripheral portion is integrated with the sliding support member. For this reason, costs can be reduced.

In the through anchor of the second aspect of the present invention, the attachment hole is formed in the main body member, and the main body member is attached at the attachment hole to the side of the vehicle body and made rotatable. Furthermore, the through hole is formed in the main body member, and the webbing worn by the occupant of the vehicle is inserted through the through hole. Moreover, the sliding support member is secured to the periphery of the through hole, but no at the entire outer peripheral end surface of the main body member, and the sliding support member slidably supports the webbing.

Here, the stiff portion that is stiff is secured to the periphery of the attachment hole in the main body member, and the stiff portion reduces the rotational resistance of the main body member. Moreover, the elastic portion that is elastic is secured to the periphery of the attachment hole in the main body member, and the elastic portion reduces the rotational resistance of the main body member. For this reason, the rotational performance of the main body member can be improved.

In the through anchor of the third aspect of the present invention, the stiff portion and the elastic portion are integrated. For this reason, costs can be reduced.

In the through anchor of the fourth aspect of the present invention, the attachment hole is formed in the main body member, and the main body member is attached at the attachment hole to the side of the vehicle body and made rotatable. Furthermore, the through hole is formed in the main body member, and the webbing worn by the occupant of the vehicle is inserted through the through hole. Moreover, the sliding support member is secured to the periphery of the through hole, but no at the entire outer peripheral end surface of the main body member, and the sliding support member slidably supports the webbing.

Here, the elastic portions that are elastic are secured to the periphery of the attachment hole in the main body member, the elastic portions are plurally disposed in the circumferential direction of the attachment hole, and the elastic portions reduce the rotational resistance of the main body member. For this reason, the rotational performance of the main body member can be improved.

In the through anchor of the fifth aspect of the present invention, the stiff portion that is stiff is secured to the periphery of the attachment hole in the main body member, the stiff portion is disposed between the elastic portions, and the stiff portion reduces the rotational resistance of the main body member. For this reason, the rotational performance of the main body member can be improved even more.

In the through anchor of the sixth aspect of the present invention, the attachment hole is formed in the main body member, and the main body member is attached at the attachment hole to the side of the vehicle body and made rotatable. Furthermore, the through hole is formed in the main body member, and the webbing worn by the occupant of the vehicle is inserted through the through hole. Moreover, the sliding support member is secured to the periphery of the through hole, but no at the entire outer peripheral end surface of the main body member, and the sliding support member slidably supports the webbing.

Here, the peripheral portion is secured to the periphery of the attachment hole in the main body member, and the peripheral portion reduces the rotational resistance of the main body member. For this reason, the rotational performance of the main body member can be improved.

Moreover, the section of the peripheral portion on the obverse side of the main body member and the section of the peripheral portion on the reverse side of the main body member are integrated. For this reason, costs can be reduced.

In the through anchor of the seventh aspect of the present invention, the attachment hole is formed in the main body member, and the main body member is attached at the attachment hole to the side of the vehicle body and made rotatable. Furthermore, the through hole is formed in the main body member, and the webbing worn by the occupant of the vehicle is inserted through the through hole. Moreover, the sliding support member is secured to the periphery of the through hole, but no at the entire outer peripheral end surface of the main body member, and the sliding support member slidably supports the webbing.

Here, the elastic portion that is elastic is secured to the periphery of the attachment hole in the main body member, and the elastic portion reduces the rotational resistance of the main body member. For this reason, the rotational performance of the main body member can be improved.

Moreover, the elastic portion is integrated with the sliding support member. For this reason, costs can be reduced.

### BRIEF DESCRIPTION OF DRAWINGS

FIG. 1 is a front view showing a through anchor pertaining to a first embodiment of the present invention as seen from inside in a vehicle width direction in a state in which the through anchor is attached to a vehicle;
FIG. 2 is a cross-sectional view (a cross-sectional view along line 2-2 of FIG. 1) showing the through anchor pertaining to the first embodiment of the present invention;
FIG. 3 is a front view showing an anchor plate of the through anchor pertaining to the first embodiment of the present invention as seen from inside in the vehicle width direction in a state in which the through anchor is attached to a vehicle;
FIG. 4 is a front view showing a through anchor pertaining to a second embodiment of the present invention as seen from inside in the vehicle width direction in a state in which the through anchor is attached to a vehicle; and
FIG. 5 is a cross-sectional view (a cross-sectional view along line 5-5 of FIG. 4) showing the through anchor pertaining to the second embodiment of the present invention.

### BEST MODES FOR CARRYING OUT THE INVENTION

### First Embodiment

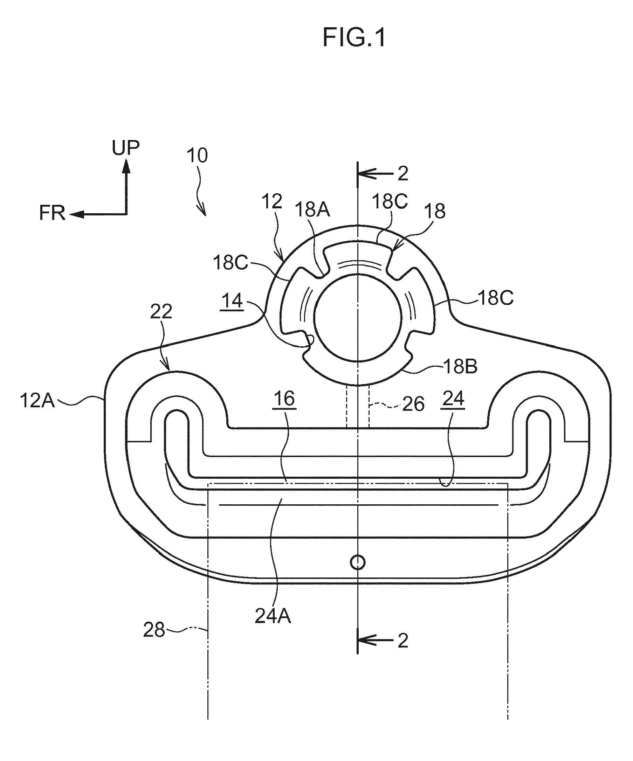

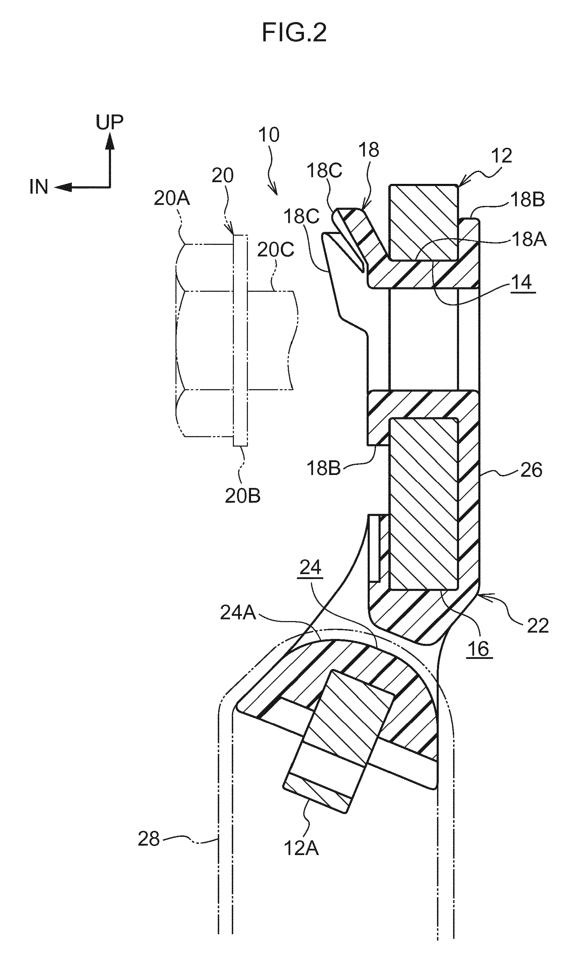

In FIG. 1, a through anchor 10 (a webbing suspender) pertaining to a first embodiment of the present invention is shown in a front view as seen from inside in a vehicle width direction in a state in which the through anchor 10 is attached to a vehicle, and in FIG. 2, a cross-sectional view (a cross-sectional view along line 2-2 of FIG. 1) of the through anchor 10 is shown. In the drawings, arrow FR indicates the front of a vehicle in a case where the through anchor 10 is attached to a vehicle, arrow IN indicates inward in a vehicle width direction, and arrow UP indicates upward.

The through anchor 10 pertaining to the present embodiment is used as a so-called slip joint (shoulder anchor) in a so-called 3-point seat belt device, and the through anchor 10 is disposed on the upper portion of a vehicle body on the vehicle width direction outside and the vehicle rear side of a seat (not shown in the drawings) for an occupant of a vehicle (automobile) to sit in.

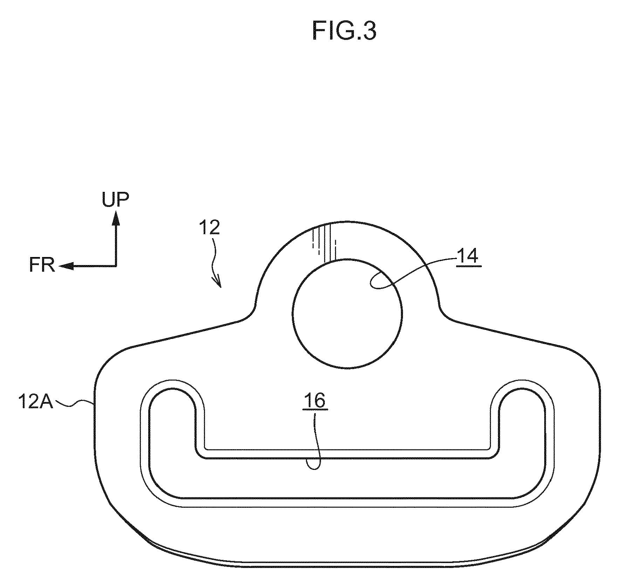

As shown in FIG. 1 and FIG. 2, the through anchor 10 has a plate-shaped anchor plate 12 (see FIG. 3) that is made of metal (steel) and serves as a main body member (strength member), and the anchor plate 12 is manufactured by stamping. The up and down middle portion of the anchor plate 12 is bent, and the section of the anchor plate 12 on the lower side of this bent portion is inclined in a direction heading inward in the vehicle width direction as it heads downward.

A circular securing hole 14 that serves as an attachment hole is formed through the upper portion of the anchor plate 12. A through hole 16 having a U shape as seen from the vehicle width direction is formed through the bent portion of the up and down direction middle portion of the anchor plate 12; the central portion of the through hole 16 extends in the vehicle front and rear direction, and the vehicle front side end portion and the vehicle rear side end portion of the through hole 16 extend at substantially right angles upward.

In the anchor plate 12, a bush 18 that is made of resin and serves as a peripheral portion is molded (secured) by integral molding (insert molding) to the entire periphery of the securing hole 14. A hollow cylinder-like tube portion 18A that serves as a connecting portion and configures a stiff portion is disposed in the bush 18. The tube portion 18A is fitted inside the securing hole 14, covers the entire inner peripheral surface of the securing hole 14, and projects inward in the vehicle width direction and outward in the vehicle width direction from the anchor plate 12, and the tube portion 18A is stiff (is made more difficult to be elastically deformed than projecting portions 18C described below).

Flange portions 18B that configure the stiff portion are integrally disposed on the outer peripheries of the vehicle width direction inside end and the vehicle width direction outside end of the tube portion 18A. The anchor plate 12 is sandwiched from its obverse and reverse sides between the vehicle width direction outside flange portion 18B and the vehicle width direction inside flange portion 18B, and the flange portions 18B are stiff (are made to be more difficult to be elastically deformed than projecting portions 18C described below). The vehicle width direction outside flange portion 18B is given an annular flat plate shape and projects outward in the radial direction from the entire periphery of the tube portion 18A, and the vehicle width direction outside flange portion 18B covers the vehicle width direction outside surface of the anchor plate 12 all around the securing hole 14 (the rim portion of the securing hole 14 along its entire circumferential direction). The vehicle width direction inside flange portion 18B is given a flat plate shape curved in a substantially semicircular arc shape and projects outward in the radial direction from the lower side section of the tube portion 18A, and the vehicle width direction inside flange portion 18B covers the vehicle width direction inside surface of the through anchor 12 on the lower side of the securing hole 14 (the lower side rim portion of the securing hole 14).

Projecting portions 18C that serve as elastic portions are integrally disposed on the vehicle front side, the upper side, and the vehicle rear side of the outer periphery of the vehicle width direction inside end of the tube portion 18A, and the projecting portions 18C project in a direction heading inward in the vehicle width direction as they head outward in the radial direction of the tube portion 18A and are elastic (are made easier to be elastically deformed than the tube portion 18A and the flange portions 18B). The projecting portions 18C are each given a plate shape convexly curved outward in the radial direction of the tube portion 18A, and the projecting portions 18C are each curved in a substantially circular arc shape along the circumferential direction of the tube portion 18A as seen from the vehicle width direction.

The vehicle front side projecting portion 18C is disposed on the vehicle front side end portion of the tube portion 18A, and the vehicle rear side projecting portion 18C is disposed on the vehicle rear side end portion of the tube portion 18A. Moreover, the upper side projecting portion 18C is disposed on the upper end portion of the tube portion 18A. For this reason, the vehicle front side, upper side, and vehicle rear side projecting portions 18C are given a symmetrical arrangement relative to a plane perpendicular to the vehicle front and rear direction and passing through the central axis of the tube portion 18A. Furthermore, the vehicle width direction inside flange portion 18B is disposed between the vehicle front side projecting portion 18C and the vehicle rear side projecting portion 18C.

The anchor plate 12 is secured (attached), at the bush 18 in the periphery of the securing hole 14, to the vehicle body by a bolt 20 that serves as an attachment member and configures a side of a vehicle body. A polygonal column-like (e.g., a hexagonal column-like) head portion 20A is disposed on the vehicle width direction inside of the bolt 20, and a circular flat plate-like flange 20B is coaxially and integrally disposed on the vehicle width direction outside of the head portion 20A. Moreover, a substantially solid cylinder-like threaded portion 20C is coaxially and integrally disposed on the vehicle width direction outside of the flange 20B.

Here, the threaded portion 20C is screwed to the vehicle body in a state in which the threaded portion 20C has been fitted inside the tube portion 18A of the bush 18, and the bolt 20 is secured to the vehicle body in a state in which the bolt 20 is disposed with its axial direction parallel to the vehicle width direction, so that the bush 18 is sandwiched and held between the flange 20B and the vehicle body, and the anchor plate 12 (the through anchor 10) is secured (fastened) to the vehicle body. Because of this, the vehicle width direction outside end surface of the tube portion 18A and the vehicle width direction outside flange portion 18B of the bush 18 are placed in planar contact (may also be linear contact or point contact) with the vehicle body, and the projecting portions 18C on the vehicle width direction inside of the bush 18 are placed in linear contact (may also be point contact or planar contact) with the flange 20B in a state in which the projecting portions 18C have been elastically deformed outward in the vehicle width direction.

The anchor plate 12 (the through anchor 10) is made rotatable in the vehicle front and rear direction about the central axis of the bolt 20, and when the anchor plate 12 is rotated in the vehicle front and rear direction about the central axis of the bolt 20, the vehicle width direction outside end surface of the tube portion 18A and the vehicle width direction outside flange portion 18B of the bush 18 slide on the vehicle body, and the projecting portions 18C on the vehicle width direction inside of the bush 18 slide on the flange 20B.

A guide piece 22 that is made of resin and serves as a sliding support member (insertion portion) is molded (secured) by integral molding (insert molding) to the up and down direction middle portion of the anchor plate 12, and the guide piece 22 is made of the same material as the bush 18. The guide piece 22 covers the entire periphery of the through hole 16 (the rim portion and the inner peripheral surface of the through hole 16 along its entire circumferential direction) in the anchor plate 12 from inside in the vehicle width direction, outside in the vehicle width direction, and the through hole 16 side, and the guide piece 22 is disposed only in the neighborhood of the entire periphery of the through hole 16 and does not cover an entire outer peripheral end surface 12A of the anchor plate 12.

An insertion hole 24 having a U shape as seen from the vehicle width direction is formed through the guide piece 22, and the insertion hole 24 is disposed inside the through hole 16 in the anchor plate 12. The insertion hole 24 is given a shape that is smaller than, but substantially resembles that of, the through hole 16; the central portion of the insertion hole 24 extends in the vehicle front and rear direction, and the vehicle front side end portion and the vehicle rear side end portion of the insertion hole 24 extend at substantially right angles upward. The lower side surface of the central portion of the insertion hole 24 is made into a sliding surface 24A (a support surface), and the sliding surface 24A is convexly curved in a cross-sectionally substantially semicircular arc shape as seen from the vehicle front and rear direction.

On the vehicle width direction outside surface of the anchor plate 12, a coupling portion 26 that is made of resin and serves as coupling means is molded (secured) by integral molding (insert molding) between the bush 18 and the guide piece 22, and the coupling portion 26 is made of the same material as the bush 18 and the guide piece 22 and is molded simultaneously with the bush 18 and the guide piece 22. The cross section of the coupling portion 26 as seen from the up and down direction is given a rectangular shape, the coupling portion 26 extends in the up and down direction, and the coupling portion 26 couples the lower end of the vehicle width direction outside flange portion 18B of the bush 18 and the vehicle front and rear direction central upper end of the vehicle width direction outside section of the guide piece 22 to one another on the vehicle width direction outside of the anchor plate 12. For this reason, the bush 18 and the guide piece 22 are coupled to one another by the coupling portion 26 and integrated.

Long band-like webbing 28 is inserted (passed) through the central portion of the insertion hole 24 (the central portion of the through hole 16) in the guide piece 22 in such a way that the webbing 28 is movable in its lengthwise direction. The base end side of the webbing 28 on the vehicle width direction outside (vehicle outside) of the insertion hole 24 extends downward from the through anchor 10 and is taken up in a take-up device (not shown in the drawings), and the take-up device is secured to the vehicle width direction outside and the lower side of the seat for an occupant to sit in and urges the webbing 28 in a take-up direction. The distal end side of the webbing 28 on the vehicle width direction inside (cabin side) of the insertion hole 24 extends downward from the through anchor 10 and is secured to the vehicle width direction outside and the lower side of the seat. For this reason, the webbing 28 is brought into contact with, and supported (suspended) in a doubled-back state on, the sliding surface 24A of the insertion hole 24 by the urging force resulting from the take-up device, and when the webbing 28 is moved in its lengthwise direction relative to the insertion hole 24, the webbing 28 slides on and is guided by the sliding surface 24A.

The webbing 28 is inserted through a tongue (not shown in the drawings) on its distal end side relative to the through anchor 10 (the insertion hole 24), and the tongue is movable along the lengthwise direction of the webbing 28. A buckle (not shown in the drawings) is attached to the vehicle width direction inside and the lower side of the seat, and when the webbing 28 is pulled out counter to the urging force from the take-up device and the tongue is engaged with the buckle, the webbing 28 is worn by an occupant (not shown in the drawings) seated in the seat.

When the webbing 28 is worn by the occupant, the distal end side of the webbing 28 relative to the through anchor 10 (the insertion hole 24) extends obliquely downward toward the vehicle front from the through anchor 10, and the through anchor 10 is rotated toward the vehicle front side. Moreover, in the event of a vehicle emergency (at the time of a crash, etc.), the pulling-out of the webbing 28 from the take-up device is locked by the take-up device.

Next, the action of the present embodiment will be described.

In the through anchor 10 having the above configuration, the bush 18 is integrally molded to the entire periphery of the securing hole 14 in the anchor plate 12, and the anchor plate 12 is secured at the bush 18 to the vehicle body by the bolt 20.

Moreover, the guide piece 22 is integrally molded to the periphery of the through hole 16 in the anchor plate 12, the webbing 28 is inserted through the insertion hole 24 in the guide piece 22 in such a way that the webbing 28 is movable along its lengthwise direction, and the webbing 28 is slidably supported on the sliding surface 24A of the guide piece 22.

Furthermore, the guide piece 22 is disposed only on the entire periphery of the through hole 16 in the anchor plate 12 and exposes the entire outer peripheral end surface 12A of the anchor plate 12.

In this connection, when the webbing 28 is pulled out counter to the urging force from the take-up device and is worn by the occupant, or when the webbing 28 is removed from the occupant (when the tongue is disengaged from the buckle) and is taken up by the urging force in the take-up device, or when the webbing 28 worn by the occupant is pulled by the occupant, or when the occupant stops pulling the webbing 28 worn by the occupant, the through anchor 10 is rotated in the vehicle front and rear direction about the central axis of the bolt 20.

Here, when the through anchor 10 is rotated in the vehicle front and rear direction about the central axis of the bolt 20, the vehicle width direction outside end surface of the tube portion 18A and the vehicle width direction outside flange portion 18B of the bush 18 slide on the vehicle body, and the projecting portions 18C on the vehicle width direction inside of the bush 18 slide on the flange 20B of the bolt 20. For this reason, the sliding resistance (wear resistance) of the through anchor 10 with respect to the vehicle body and the bolt 20 can be reduced, the rotational resistance of the through anchor 10 can be reduced, and the rotational performance of the through anchor 10 can be improved.

Furthermore, the elastically deformed projecting portions 18C of the bush 18 are in contact with the flange 20B of the bolt 20. For this reason, when the through anchor 10 is rotated in the vehicle front and rear direction about the central axis of the bolt 20, the elastically deformed projecting portions 18C of the bush 18 slide on the flange 20B of the bolt 20, so that tilting of the through anchor 10 in the vehicle width direction can be controlled by the elastic force of the projecting portions 18C, and the rotational performance of the through anchor 10 can be improved even more.

Moreover, the projecting portions 18C are disposed three on the bush 18. For this reason, when the through anchor 10 is rotated in the vehicle front and rear direction about the central axis of the bolt 20, the through anchor 10 can be supported on a flat surface at the three projecting portions 18C, tilting of the through anchor 10 in the vehicle width direction can be effectively controlled by the elastic force of the projecting portions 18C, and the rotational performance of the through anchor 10 can be improved even more.

Furthermore, as described above, the elastically deformed projecting portions 18C of the bush 18 are in contact with the flange 20B of the bolt 20. For this reason, when the vehicle vibrates, tilting vibration (rattling) of the through anchor 10 in the vehicle width direction can be absorbed by the elastic force of the projecting portions 18C, and the occurrence of abnormal sounds caused by tilting vibration of the through anchor 10 in the vehicle width direction can be controlled.

Moreover, as described above, the projecting portions 18C are disposed three on the bush 18. For this reason, when the vehicle vibrates, the through anchor 10 can be supported on a flat surface at the three projecting portions 18C, tilting vibration (rattling) of the through anchor 10 in the vehicle width direction can be effectively absorbed by the elastic force of the projecting portions 18C, and the occurrence of abnormal sounds caused by tilting vibration of the through anchor 10 in the vehicle width direction can be effectively controlled.

Furthermore, in the bush 18, the vehicle width direction outside flange portion 18B and the vehicle width direction inside flange portion 18B are coupled (connected) to one another by the tube portion 18A, and the tube portion 18A and the pair of flange portions 18B are integrated. For this reason, the number of parts of the bush 18 can be reduced, and the cost of the through anchor 10 can be reduced.

Moreover, in the bush 18, the tube portion 18A and the pair of flange portions 18B are simultaneously molded. For this reason, the number of steps involved in molding the bush 18 can be reduced, and the cost of the through anchor 10 can be reduced even more.

Furthermore, in the bush 18, the plural projecting portions 18C are coupled (connected) to the tube portion 18A, and the tube portion 18A, the pair of flange portions 18B, and the plural projecting portions 18C are integrated. For this reason, the number of parts of the bush 18 can be reduced even more, and the cost of the through anchor 10 can be reduced even more.

Moreover, in the bush 18, the tube portion 18A, the pair of flange portions 18B, and the plural projecting portions 18C are simultaneously molded. For this reason, the number of steps involved in molding the bush 18 can be reduced even more, and the cost of the through anchor 10 can be reduced even more.

Furthermore, the bush 18 and the guide piece 22 are coupled to one another by the coupling portion 26, and the bush 18, the guide piece 22, and the coupling portion 26 are integrated. For this reason, the number of parts of the through anchor 10 can be reduced, and the cost of the through anchor 10 can be reduced even more. Moreover, situations where one of the bush 18 and the guide piece 22 is not disposed when the through anchor 10 is manufactured can be curbed, situations where one of the bush 18 and the guide piece 22 comes off of the through anchor 10 can be curbed, and situations where one of the bush 18 and the guide piece 22 does not exist on the through anchor 10 can be curbed.

Moreover, the bush 18, the guide piece 22, and the coupling portion 26 are simultaneously molded in a shared mold. For this reason, the number of steps involved in molding the bush 18, the guide piece 22, and the coupling portion 26 can be reduced, and the cost of the through anchor 10 can be reduced even more.

In the present embodiment, the bush 18 and the guide piece 22 are integrated by the coupling portion 26. However, the bush 18 and the guide piece 22 may also be separate. In this case, the bush 18 and the guide piece 22 may also be simultaneously molded.

Furthermore, in the present embodiment, the coupling portion 26 is disposed on the vehicle width direction outside of the anchor plate 12. However, it suffices for the coupling portion 26 to be disposed on at least one of the vehicle width direction inside and the vehicle width direction outside of the anchor plate 12.

### Second Embodiment

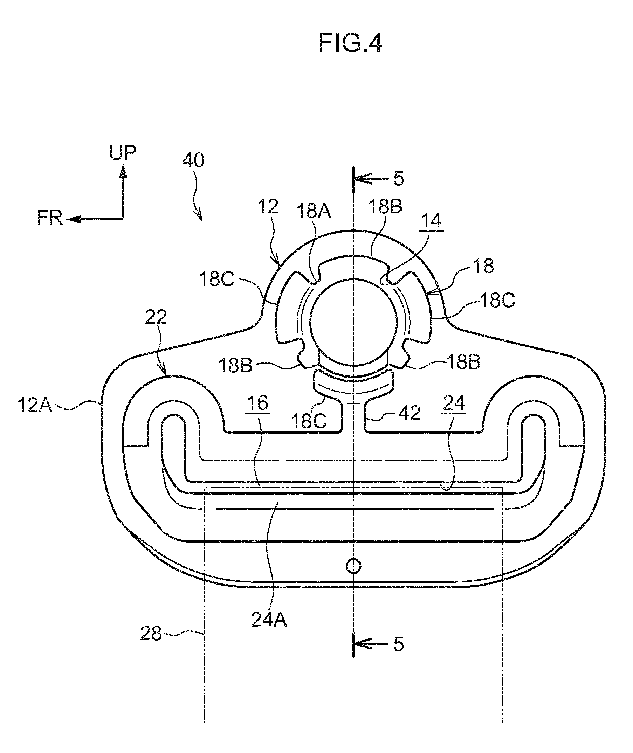

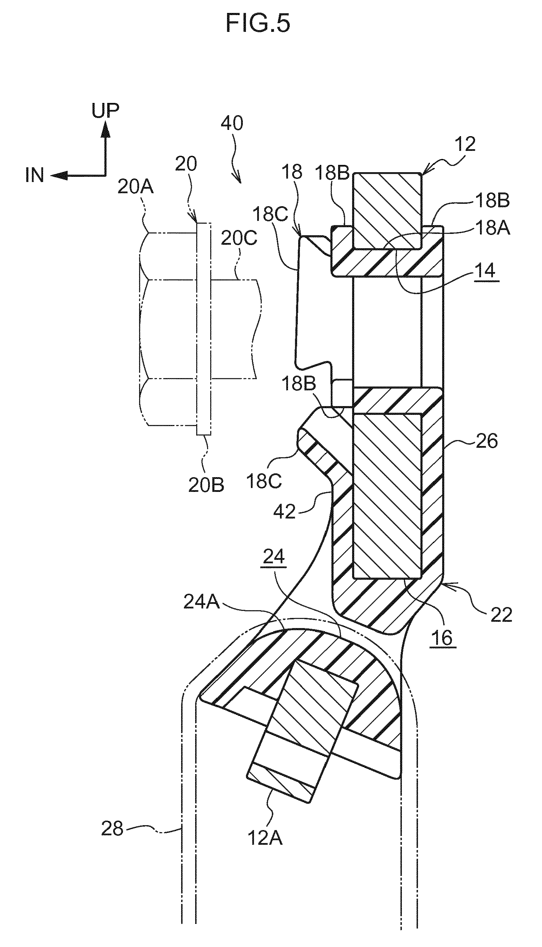

In FIG. 4, a through anchor 40 (a webbing suspender) pertaining to a second embodiment of the present invention is shown in a front view as seen from inside in the vehicle width direction in a state in which the through anchor 40 is attached to a vehicle, and in FIG. 5, a cross-sectional view (a cross-sectional view along line 5-5 of FIG. 4) of the through anchor 40 is shown.

The through anchor 40 pertaining to the present embodiment has substantially the same configuration as the first embodiment but differs in the following respects.

As shown in FIG. 4 and FIG. 5, in the through anchor 40 pertaining to the present embodiment, in the bush 18, vehicle width direction inside flange portions 18B are disposed on the vehicle front side, the upper side, and the vehicle rear side. The vehicle width direction inside and vehicle front side flange portion 18B is disposed between the vehicle front side end and the lower end of the tube portion 18A, and the vehicle width direction inside and vehicle rear side flange portion 18B is disposed between the vehicle rear side end and the lower end of the tube portion 18A. Moreover, the vehicle width direction inside and upper side flange portion 18B is disposed on the upper end portion of the tube portion 18A. Because of this, the vehicle front side, upper side, and vehicle rear side flange portions 18B on the vehicle width direction inside are given a symmetrical arrangement relative to a plane perpendicular to the vehicle front and rear direction and passing through the central axis of the tube portion 18A.

Projecting portions 18C of the bush 18 are disposed on the vehicle front side, the lower side, and the vehicle rear side of the vehicle width direction inside end portion of the tube portion 18A. The vehicle front side and vehicle rear side projecting portions 18C are integrated with the tube portion 18A, and the vehicle front side and vehicle rear side projecting portions 18C are disposed on the vehicle front side end portion and the vehicle rear side end portion, respectively, of the tube portion 18A and extend in a direction heading inward in the vehicle width direction as they head outward in the radial direction of the tube portion 18A. Moreover, the lower side projecting portion 18C is spaced apart from the tube portion 18A, and the lower side projecting portion 18C is disposed on the lower side of the lower end portion of the tube portion 18A and extends in a direction heading inward in the vehicle width direction as it heads inward in the radial direction of the tube portion 18A. Because of this, the vehicle front side, lower side, and vehicle rear side projecting portions 18C are given a symmetrical arrangement relative to a plane perpendicular to the vehicle front and rear direction and passing through the central axis of the tube portion 18A. Furthermore, the vehicle width direction inside and upper side flange portion 18B is disposed between the vehicle front side projecting portion 18C and the vehicle rear side projecting portion 18C, the vehicle width direction inside and vehicle front side flange portion 18B is disposed between the vehicle front side projecting portion 18C and the lower side projecting portion 18C, and the vehicle width direction inside and vehicle rear side flange portion 18B is disposed between the vehicle rear side projecting portion 18C and the lower side projecting portion 18C.

The tube portion 18A of the bush 18 does not project inward in the vehicle width direction between the lower sides of the vehicle front side and vehicle rear side projecting portions 18C (directly over the lower side projecting portion 18C).

On the vehicle width direction inside surface of the anchor plate 12, an additional coupling portion 42 that is made of resin and serves as coupling means is molded (secured) by integral molding (insert molding) between the bush 18 and the guide piece 22, and the additional coupling portion 42 is made of the same material as the bush 18, the guide piece 22, and the coupling portion 26 and is molded simultaneously with the bush 18, the guide piece 22, and the coupling portion 26. The cross section of the additional coupling portion 42 as seen from the up and down direction is given a rectangular shape, the additional coupling portion 42 extends in the up and down direction, and the additional coupling portion 42 couples the lower end of the lower side projecting portion 18C of the bush 18 and the vehicle front and rear direction central upper end of the vehicle width direction inside section of the guide piece 22 to one another on the vehicle width direction inside of the anchor plate 12. For this reason, the bush 18 and the guide piece 22 are coupled to one another by the coupling portion 26 and the additional coupling portion 42 and integrated.

Here, in the present embodiment also, the same action and effects as those of the first embodiment can be achieved.

In particular, in the bush 18, the three projecting portions 18C are given a symmetrical arrangement relative to a plane perpendicular to the vehicle front and rear direction and passing through the central axis of the tube portion 18A and are disposed substantially equidistantly in the circumferential direction of the tube portion 18A. For this reason, when the through anchor 40 is rotated in the vehicle front and rear direction about the central axis of the bolt 20, the through anchor 40 can be supported on a flat surface in a wide range at the three projecting portions 18C, tilting of the through anchor 40 in the vehicle width direction can be even more effectively controlled by the elastic force of the projecting portions 18C, and the rotational performance of the through anchor 40 can be improved even more. Moreover, when the vehicle vibrates, the through anchor 40 can be supported on a flat surface in a wide range at the three projecting portions 18C, tilting vibration (rattling) of the through anchor 40 in the vehicle width direction can be even more effectively absorbed by the elastic force of the projecting portions 18C, and the occurrence of abnormal sounds caused by tilting vibration of the through anchor 40 in the vehicle width direction can be even more effectively controlled.

Furthermore, the bush 18 and the guide piece 22 are coupled to one another by the coupling portion 26 and the additional coupling portion 42, and the bush 18, the guide piece 22, the coupling portion 26, and the additional coupling portion 42 are integrated. For this reason, the number of parts of the through anchor 40 can be reduced, and the cost of the through anchor 40 can be reduced even more. Moreover, situations where one of the bush 18 and the guide piece 22 is not disposed when the through anchor 40 is manufactured can be curbed, situations where one of the bush 18 and the guide piece 22 comes off of the through anchor 40 can be curbed, and situations where one of the bush 18 and the guide piece 22 does not exist on the through anchor 40 can be curbed.

Moreover, the bush 18, the guide piece 22, the coupling portion 26, and the additional coupling portion 42 are simultaneously molded in a shared mold. For this reason, the number of steps involved in molding the bush 18, the guide piece 22, the coupling portion 26, and the additional coupling portion 42 can be reduced, and the cost of the through anchor 40 can be reduced even more.

In the first embodiment and the second embodiment, at least one of the vehicle width direction inside end surface of the tube portion 18A and the vehicle width direction inside flange portion(s) 18B of the bush 18 may be in planar contact (may also be linear contact or point contact) with the flange 20B of the bolt 20. In this case, when the through anchor 10 and 40 is rotated in the vehicle front and rear direction about the central axis of the bolt 20, at least one of the vehicle width direction inside end surface of the tube portion 18A and the vehicle width direction inside flange portion(s) 18B slides on the flange 20B of the bolt 20.

Furthermore, in the first embodiment and the second embodiment, the flange portions 18B of the bush 18 are disposed on the vehicle width direction inside and the vehicle width direction outside of the anchor plate 12. However, it suffices for the flange portion(s) 18B of the bush 18 to be disposed on at least one of the vehicle width direction inside and the vehicle width direction outside of the anchor plate 12.

Moreover, in the first embodiment and the second embodiment, the projecting portions 18C are disposed on the vehicle width direction inside of the anchor plate 12. However, the projecting portions 18C may also be disposed on the vehicle width direction outside of the anchor plate 12. In this case, in the second embodiment, the additional coupling portion 42 is disposed on the vehicle width direction outside of the anchor plate 12 and the coupling portion 26 is disposed on the vehicle width direction inside of the anchor plate 12.

Furthermore, in the first embodiment and the second embodiment, three projecting portions 18C are disposed on the bush 18. However, one, two, or four or more projecting portions 18C may also be disposed on the bush 18.

Moreover, in the first embodiment and the second embodiment, a cover (covering member) may also be attached to the vehicle width direction inside of the anchor plate 12 so that the vehicle width direction inside of the anchor plate 12 is covered by the cover. In this case, a passing hole may be formed through the cover, and the insertion hole 24 in the guide piece 22 may be exposed to the vehicle width direction inside by the passing hole, so that the webbing 28 may be passed (inserted) through the passing hole.

Furthermore, in the first embodiment and the second embodiment, the through anchors 10 and 40 are applied to a slip joint. However, it suffices for the through anchors 10 and 40 to be rotatably attached to a side of a vehicle body.

### Reference Signs List

- 10: Through Anchor
- 12: Anchor Plate (Main Body Member)
- 12A: Outer Peripheral End Surface
- 14: Securing Hole (Attachment Hole)
- 16: Through Hole
- 18: Bush (Peripheral Portion)
- 18A: Tube Portion (Stiff Portion)
- 18B: Flange Portion (Stiff Portion)
- 18C: Projecting Portion (Elastic Portion)
- 22: Guide Piece (Sliding Support Member)
- 28: Webbing
- 40: Through Anchor

## Claims

1. A through anchor comprising:
a main body member in which are formed an attachment hole at which the main body member is attached to a side of a vehicle body and made rotatable and a through hole through which is inserted webbing worn by an occupant of a vehicle;
a sliding support member that is secured to a periphery of the through hole, but no at an entire outer peripheral end surface of the main body member, and that slidably supports the webbing; and
a peripheral portion that is secured to a periphery of the attachment hole in the main body member, is integrated with the sliding support member, and reduces rotational resistance of the main body member.

2. A through anchor comprising:
a main body member in which are formed an attachment hole at which the main body member is attached to a side of a vehicle body and made rotatable and a through hole through which is inserted webbing worn by an occupant of a vehicle;
a sliding support member that is secured to a periphery of the through hole, but no at an entire outer peripheral end surface of the main body member, and that slidably supports the webbing;
a stiff portion that is secured to a periphery of the attachment hole in the main body member, is stiff, and reduces rotational resistance of the main body member; and
an elastic portion that is secured to the periphery of the attachment hole in the main body member, is elastic, and reduces the rotational resistance of the main body member.

3. The through anchor according to claim 2, wherein the stiff portion and the elastic portion are integrated.

4. A through anchor comprising:
a main body member in which are formed an attachment hole at which the main body member is attached to a side of a vehicle body and made rotatable and a through hole through which is inserted webbing worn by an occupant of a vehicle;
a sliding support member that is secured to a periphery of the through hole, but no at an entire outer peripheral end surface of the main body member, and that slidably supports the webbing; and
elastic portions that are secured to a periphery of the attachment hole in the main body member, are plurally disposed in a circumferential direction of the attachment hole, are elastic, and reduce rotational resistance of the main body member.

5. The through anchor according to claim 4, further comprising a stiff portion that is secured to the periphery of the attachment hole in the main body member, is disposed between the elastic portions, is stiff, and reduces the rotational resistance of the main body member.

6. A through anchor comprising:
a main body member in which are formed an attachment hole at which the main body member is attached to a side of a vehicle body and made rotatable and a through hole through which is inserted webbing worn by an occupant of a vehicle;
a sliding support member that is secured to a periphery of the through hole, but no at an entire outer peripheral end surface of the main body member, and that slidably supports the webbing; and
a peripheral portion that is secured to a periphery of the attachment hole in the main body member, with a section of the peripheral portion on an obverse side of the main body member and a section of the peripheral portion on an reverse side of the main body member being integrated, and reduces rotational resistance of the main body member.

7. A through anchor comprising:
a main body member in which are formed an attachment hole at which the main body member is attached to a side of a vehicle body and made rotatable and a through hole through which is inserted webbing worn by an occupant of a vehicle;
a sliding support member that is secured to a periphery of the through hole, but no at an entire outer peripheral end surface of the main body member, and that slidably supports the webbing; and
an elastic portion that is secured to a periphery of the attachment hole in the main body member, is integrated with the sliding support member, is elastic, and reduces rotational resistance of the main body member.
